(19) **Europäisches Patentamt / European Patent Office / Office européen des brevets**

(11)　**EP 2 877 822 B1**

(12)　## FASCICULE DE BREVET EUROPEEN

(45) Date de publication et mention de la délivrance du brevet:
**18.05.2016　Bulletin 2016/20**

(21) Numéro de dépôt: **13756601.4**

(22) Date de dépôt: **25.07.2013**

(51) Int Cl.:
*G01J 4/02* (2006.01)　　*G01J 4/04* (2006.01)

(86) Numéro de dépôt international:
**PCT/FR2013/051804**

(87) Numéro de publication internationale:
**WO 2014/016528 (30.01.2014 Gazette 2014/05)**

(54) **DISPOSITIF ET PROCÉDÉ D'ANALYSE POLARIMÉTRIQUE À DIVISION DE FRONT D'ONDE, SPECTROPOLARIMÈTRE, CAMÉRA POLARIMÉTRIQUE ET MICROSCOPE OPTIQUE UTILISANT UN TEL DISPOSITIF**

ANALYSEVERFAHREN UND VORRICHTUNG FÜR POLARIMETRISCHE WELLEFRONTTEILUNGSANALYSE, SPEKTROPOLARIMETER, POLARIMETRISCHE KAMERA UND OPTISCHES MIKROSKOP MIT EINER DERARTIGEN VORRICHTUNG

WAVEFRONT-DIVISION POLARIMETRIC ANALYSIS METHOD AND DEVICE, SPECTROPOLARIMETER, POLARIMETRIC CAMERA AND OPTICAL MICROSCOPE USING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012　FR 1257329**

(43) Date de publication de la demande:
**03.06.2015　Bulletin 2015/23**

(73) Titulaire: **Horiba Jobin Yvon S.A.S.**
**91160 Longjumeau (FR)**

(72) Inventeurs:
- **ACHER, Olivier**
  **F-91190 Gif Sur Yvette (FR)**
- **RICHARD, Simon**
  **F-91120 Palaiseau (FR)**
- **NGUYEN, Thanh-Liem**
  **F-92190 Meudon (FR)**

(74) Mandataire: **Coralis Harle**
**14-16 Rue Ballu**
**75009 Paris (FR)**

(56) Documents cités:
**EP-A1- 1 519 170　　US-A1- 2003 075 676**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 877 822 B1

**Description**

L'invention concerne un dispositif d'analyse polarimétrique à division de front d'onde permettant de déterminer l'état de polarisation d'un faisceau lumineux.

L'invention concerne plus particulièrement un dispositif d'analyse polarimétrique à division de front d'onde pour la détermination des états de polarisation des différents points-sources d'un objet ou d'un faisceau lumineux.

L'invention concerne également un spectromètre, une caméra ou un microscope équipés d'un tel dispositif.

L'invention concerne enfin un procédé d'analyse polarimétrique à division de front d'onde pour la détermination de l'état de polarisation d'un faisceau lumineux amont.

La connaissance de l'état de polarisation d'un faisceau lumineux, d'une image ou bien d'une source lumineuse s'avère importante non seulement dans de nombreux domaines de l'instrumentation scientifique comme, par exemple, l'astronomie ou la microscopie, mais aussi pour de nombreuses applications comme la détection de cible ou la vision automatisée.

Pour cela, différents types de dispositifs d'analyse polarimétrique, ou polarimètres, peuvent être implémentés. Parmi ceux-ci, les polarimètres à division de front d'onde (également aussi appelés à « division d'ouverture ») apparaissent particulièrement intéressants lorsqu'il s'agit de déterminer les états de polarisation de différents points d'un objet de manière quasiment simultanée.

De tels polarimètres à division de front d'onde sont par exemple décrits dans les documents US 2003/075676 et EP 1519170.

Dans les polarimètres à division de front d'onde, différentes images correspondant à l'objet initial sont obtenues en séparant le front d'onde et en analysant en parallèle les différentes images obtenues selon différents états de polarisation.

Il est ainsi connu du document « Spectrally resolving single-shot polarimefer » (Knitter et al., in Optics Letters, Vol. 36, Issue 16, pp. 3048-3050, 2011), un dispositif d'analyse polarimétrique à division de front d'onde comportant un prisme biréfringent, un polariseur segmenté et un spectromètre imageur. Ce polarimètre produit, à partir d'un objet lumineux à analyser, une pluralité d'images de cet objet dont le traitement permet de déterminer les états de polarisation de celui-ci.

Cependant, ce polarimètre à division de front d'onde présente l'inconvénient que l'intensité lumineuse de chacune des images formées dépend fortement des conditions expérimentales. Ainsi, les valeurs mesurées des intensités lumineuses de chacune des images dépendent non seulement de l'état de polarisation, mais aussi de la distribution d'intensité lumineuse à l'endroit où la division du front d'onde est effectuée. La mesure de l'état de polarisation au moyen de ce polarimètre est alors imprécise et entachée d'erreur.

Afin de remédier à l'inconvénient précité de l'état de la technique, la présente invention propose un dispositif d'analyse polarimétrique à division de front d'onde précis et robuste, permettant de mesurer de manière quasi instantanée les états de polarisation d'un objet lumineux.

À cet effet, l'invention concerne un dispositif d'analyse polarimétrique à division de front d'onde pour déterminer l'état de polarisation d'un faisceau lumineux amont issu d'une source lumineuse tel que défini dans la revendication 1.

Le dispositif d'analyse polarimétrique à division de front d'onde selon l'invention permet donc de produire, à partir d'un faisceau lumineux amont, une pluralité de faisceaux lumineux polarisés qui ne se recouvrent pas au niveau des détecteurs et dont les états de polarisation sont tous différents. Ces faisceaux lumineux polarisés, qui portent des informations complémentaires en polarisation, sont analysées simultanément par la pluralité de détecteurs qui mesurent l'intensité lumineuse de chacun d'eux. Les moyens de traitement peuvent alors effectuer des opérations sur ces différentes intensités lumineuses et effectuer un traitement numérique sur les valeurs obtenues pour déterminer l'état de polarisation du faisceau lumineux amont.

Selon l'invention, les opérations effectuées par les moyens de traitement sur les valeurs des intensités lumineuse permettent de s'affranchir des variations d'intensité lumineuse des faisceaux lumineux divisés lors de la division du front d'onde du faisceau lumineux amont.

Le dispositif d'analyse polarimétrique selon l'invéntion est ainsi robuste, et sa précision n'est pas dégradée par les conditions expérimentales.

Selon l'invention, les moyens de division du front d'onde et les moyens de modification de la polarisation peuvent être agencés dans le dispositif d'analyse polarimétrique de telle sorte que les moyens de division du front d'onde soient placés en amont ou en aval des moyens de modification de la polarisation.

En effet, par symétrie, les deux configurations sont équivalentes d'un point de vue optique et présentent les mêmes avantages techniques.

Par ailleurs, d'autres caractéristiques avantageuses et non limitatives du dispositif selon l'invention sont énoncées dans les revendications 2 à 8.

Le dispositif d'analyse polarimétrique à division de front d'onde selon l'invention entre avantageusement dans la construction d'un spectropolarimètre, d'une caméra polarimétrique ou d'un microscope optique.

Ainsi, l'invention concerne également :

- un spectropolarimètre comportant un dispositif d'analyse polarimétrique selon l'invention ;
- une caméra polarimétrique comportant un dispositif d'analyse polarimétrique selon l'invention, et
- un microscope optique comportant un dispositif d'analyse polarimétrique selon l'invention.

L'invention concerne enfin un procédé d'analyse polarimétrique à division de front d'onde pour la détermination de l'état de polarisation d'un faisceau lumineux amont tel que défini dans la revendication 12.

Des modes de réalisation de l'invention seront décrits en détail en référence aux dessins annexés dans lesquels :

- la figure 1 est une vue schématique d'un premier mode de réalisation d'un dispositif d'analyse polarimétrique à division de front d'onde utilisé dans un spectropolarimètre imageur selon un premier mode de réalisation de l'invention ;
- les figures 2 à 4 représentent des exemples de prismes à trois pans pouvant être utilisés comme moyens de division du front d'onde dans un dispositif d'analyse polarimétrique selon l'invention ;
- la figure 5 est une vue schématique d'un deuxième mode de réalisation d'un dispositif d'analyse polarimétrique à division de front d'onde utilisé dans une caméra polarimétrique selon un deuxième mode de réalisation de l'invention ;
- la figure 6 représente un exemple de moyens de division du front d'onde comprenant deux prismes à deux pans répétés sur lesquels sont accolés des lames biréfringentes pouvant entrer dans la construction d'un microscope optique ;
- le figure 7 représente une vue schématique d'un autre mode de réalisation du dispositif d'analyse polarimétrique dans lequel les moyens de modification de la polarisation sont placés en amont des moyens de division du front d'onde.

Premier mode de réalisation

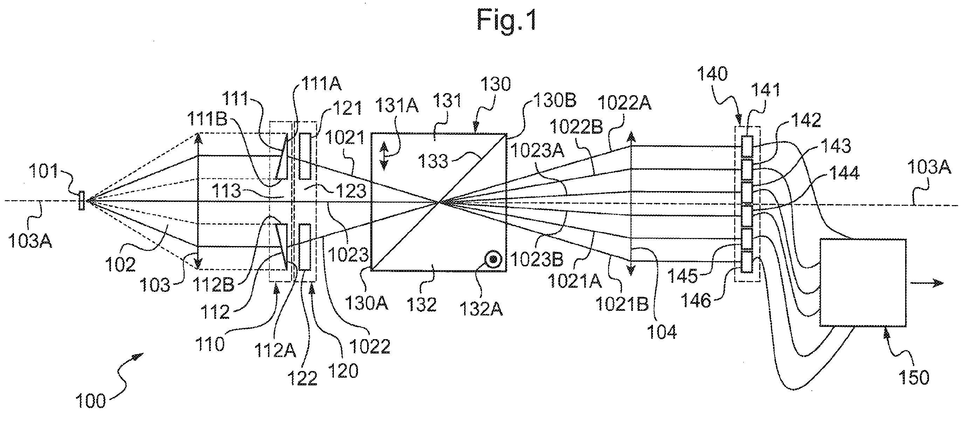

La figure 1 représente un premier mode de réalisation d'un dispositif d'analyse polarimétrique 100 pouvant entrer dans la construction d'un spectropolarimètre permettant de déterminer, pour différentes longueurs d'onde d'une plage spectrale donnée, l'état de polarisation d'un faisceau lumineux amont 102 issu d'une source lumineuse formée ici par une fente source 101 de largeur 150 microns ($\mu$m) et de hauteur 1 millimètres (mm).

Le dispositif d'analyse polarimétrique 100 comporte ici un premier système optique d'imagerie 103 permettant de collimater le faisceau lumineux amont 102. Le premier système optique d'imagerie 103 est ainsi constitué ici d'une première lentille convergente de focale 30 mm placée de telle manière que le point source 101 soit situé au foyer objet de la première lentille 103. Le faisceau lumineux amont 102 est alors transformé en un faisceau de rayons tous parallèles à l'axe optique 103A de la première lentille 103. Le front d'onde du faisceau lumineux est donc formée d'une onde plane (ou d'une superposition d'ondes planes. si le faisceau lumineux est spectralement large).

Ainsi modifié, le faisceau lumineux amont 102 se propage parallèlement à l'axe optique 103A. On considère ici que la direction de propagation du faisceau lumineux amont 102 est confondue avec la direction de l'axe optique 103A.

Le faisceau lumineux amont 102 est alors incident sur des moyens de division du front d'onde 110 du dispositif d'analyse polarimétrique 100.

Les moyens de division du front d'onde 110 comprennent ici deux prismes 111, 112 droits identiques qui sont situés de part et d'autre, et égale distance, de l'axe optique 103A.

Les faces de sortie 111A, 112A respectives des prismes 111, 112 sont perpendiculaires à l'axe optique 103A. Les prismes 111, 112 sont coplanaires et orientés de la même façon par rapport à l'axe optique 103A, de telle manière de leurs bases respectives 111B, 112B se fassent face.

L'angle au sommet des prismes 111, 112 est égal à 10,5°. Les prismes 111, 112 sont ici des prismes en verre minéral transparent, par exemple de type BK7 fabriqué par la société Schott et d'indice de réfraction 1,516 à la longueur d'onde de 589 nanomètre (nm). Les prismes 111, 112 n'ont pas de propriétés de biréfringence optique, c'est-à-dire que l'état de polarisation d'un rayon lumineux n'est pas modifié lorsque celui-ci traverse l'un des deux prismes 111, 112.

Les moyens de division du front d'onde 110 présentent également une ouverture formée par l'espace 113 situé entre les deux bases 111B, 112B des deux prismes 111, 112.

Ainsi agencés, les moyens de division du front d'onde 110 divisent le faisceau lumineux amont 102 en séparant spatialement le font d'onde incident sur les moyens de division du front d'onde 110.

En effet, les rayons lumineux du faisceau lumineux amont 102 qui sont incidents sur le premier prisme 111 traversent le premier prisme 111 pour générer un premier faisceau lumineux divisé 1021 dont tous les rayons sont parallèles entre eux.

Par souci de clarté, on n'a représenté sur la figure 1 que le rayon lumineux central du premier faisceau lumineux divisé 1021.

La partie des rayons lumineux du faisceau lumineux amont 102 qui sont incident sur le premier prisme 111 sont tous déviés par celui-ci d'un angle $\theta_D$ approximativement égal au produit $(n_0 - 1) * Â$, où $n_0$ représente l'indice de réfraction du premier prisme, ici égal à 1,516, et Â l'angle au sommet du premier prisme 111, ici égal à 10,5°. L'angle $\theta_D$ est ainsi égal à environ 5,3° (= (1,516-1) * 10,5°).

La première base 111B étant plus proche de l'axe optique 103A que le premier sommet 111C, la déviation des rayons lumineux se fait de manière à faire converger les rayons vers l'axe optique 103A.

Ainsi, le premier faisceau lumineux divisé 1021 se propage suivant une direction de propagation formant un premier angle de déviation égal à -5,3° avec la direction de propagation du faisceau lumineux amont 102.

De la même manière, les rayons lumineux du faisceau lumineux amont 102 qui sont incidents sur le deuxième prisme 112 traversent le deuxième prisme 112 pour générer un deuxième faisceau lumineux divisé 1022 dont tous les rayons sont parallèles entre eux.

Par analogie avec le premier faisceau lumineux divisé 1021, le deuxième faisceau lumineux divisé 1022 se propage suivant une direction de propagation formant un deuxième angle de déviation égale à 5,3° avec la direction de propagation du faisceau lumineux amont 102.

Par symétrie des prismes 111, 112 par rapport à l'axe optique 103A, le deuxième angle de déviation est de signe opposé au premier angle de déviation de sorte que les rayons lumineux du deuxième faisceau lumineux divisé 1022 convergent également vers l'axe optique 103A.

La partie des rayons lumineux du faisceau lumineux amont 102 qui sont incidents sur l'ouverture 113 la traversent sans être déviés pour former un troisième faisceau lumineux divisé 1023. Le troisième faisceau lumineux divisé 1023 se propage suivant une direction de propagation formant un troisième angle de déviation égal à 0° avec la direction de propagation du faisceau lumineux amont 102.

Ainsi, les trois angles de déviation sont tous différents entre eux. En outre, les moyens de division du front d'onde 110 divisent le faisceau lumineux amont 102 de sorte que les premier, deuxième, et troisième faisceaux lumineux divisés 1021, 1022, 1023 sont séparés angulairement.

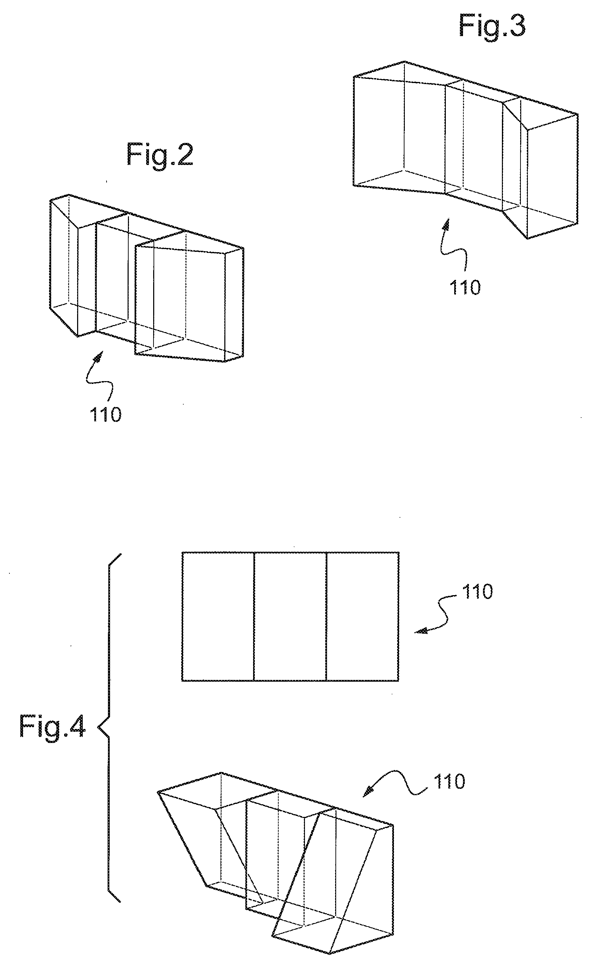

Dans d'autres modes de réalisation, les moyens de division du front d'onde peuvent par exemple comprendre un prisme à N pans, dont des exemples de réalisation sont représentés sur les figures 2 à 4 dans le cas où N est égal à 3.

En variante, on pourrait par exemple remplacer la première lentille convergente et le prisme à N pans par N lentilles situées dans le même plan et permettant de collimater N faisceaux lumineux divisés ayant tous une direction de propagation différente.

Dans un autre mode de réalisation, les moyens de division du front d'onde peuvent par exemple comprendre deux ensembles identiques de deux prismes accolés par leur base de sorte que deux prismes successifs diffèrent par leur orientation.

Comme représenté sur la figure 1, placés derrière les moyens de division du front d'onde 110, se trouvent des moyens de modification de la polarisation 120 disposés de manière à intercepter les deux faisceaux lumineux divisés 1021 et 1022. Les moyens de modification de la polarisation 120 comprennent ici une première lame biréfringente 121 et une deuxième lame biréfringente 122 placées respectivement derrière le premier prisme 111 et le deuxième prisme 112, parallèlement à leurs faces de sortie 111A, 112A respectives.

Les deux lames biréfringentes 121, 122 sont de forme parallélépipédique et sont formées d'une feuille de polymère biréfringent.

En variante, les moyens de modification de la polarisation pourraient par exemple comprendre des lames biréfringentes formées d'une lame de quartz.

En variante encore, les moyens de modification de la polarisation pourraient comprendre des films à rotation de polarisation revêtant les faces d'entrée ou de sortie des prismes.

Par exemple, la première lame biréfringente 121 est une lame à retard quart d'onde et la deuxième lame biréfringente 122 est une lame à retard demi-onde. Ces lames à retard modifient l'état de polarisation des faisceaux lumineux qui les traversent.

Ainsi, l'état de polarisation du premier faisceau lumineux divisé 1021 est modifié par la première lame biréfringente 121 et l'état de polarisation du deuxième faisceau lumineux divisé 1022 est modifié par la deuxième lame biréfringente 122.

Les retards introduits par chacune des lames biréfringentes étant différents, les premiers et deuxième faisceaux lumineux divisés 1021, 1022 sont polarisés selon des états de polarisation différents.

Les moyens de modification de la polarisation 120 comprennent également une ouverture 123 vierge située dans le prolongement de l'ouverture 113 des moyens de division du front d'onde 110. Le troisième faisceau lumineux divisé se propageant librement, son état de polarisation n'est pas modifié par les moyens de modification de la polarisation 120 lors de sa traversée de l'ouverture 123.

Ainsi, à la sortie des moyens de modification de la polarisation 120, les trois faisceaux lumineux divisés 1021, 1022, 1023 présentent des états de polarisation tous différents.

De manière générale, les moyens de modification de la polarisation 120 présentent des pertes optiques en transmission faibles, c'est-à-dire inférieures à 5 %. Ces pertes optiques sont indépendantes des états de polarisation des faisceaux lumineux divisés 1021, 1022 en entrée des moyens de modification de la polarisation 120.

Ainsi, les moyens de modification de la polarisation 120 conservent les intensités lumineuses relatives des faisceaux lumineux divisés 1021, 1022, 1023 lors de leur passage à travers les moyens de modification de la polarisation 120.

On considèrera ici que les moyens de modification de la polarisation 120 ne modifient pas l'intensité lumineuse de chacun des faisceaux lumineux divisés 1021, 1022, 1023.

Le dispositif d'analyse polarimétrique 100 représenté sur la figure 1 comporte également des moyens de séparation de polarisation 130 qui comprennent ici un prisme de Wollaston. Ce prisme de Wollaston 130 est placé en aval des moyens de modification de la polarisation 120, sa face d'entrée 130A étant perpendiculaire à et centrée sur l'axe optique 103A. Ainsi disposés, les moyens de séparation de polarisation 130 interceptent les premier, deuxième et troisième faisceaux lumineux divisés 1021, 1022, 1023, ceux-ci étant incidents sur la face d'entrée 130A du prisme de Wollaston 130.

Le prisme de Wollaston 130 est ici formé de deux prismes droits 131, 132 accolés entre eux au niveau d'une interface plane de séparation 133. Les deux prismes 131, 132 sont ici formés de deux prismes à 45° en cristal de calcite dont les axes optiques 131A, 132A sont orthogonaux. L'angle de séparation de ce prisme de Wollaston 130 est ici égal à 2,65° (pour la longueur d'onde de 589 nm).

En variante, le prisme de Wollaston pourrait être par exemple formé de deux prismes en quartz, ou en borate de baryum.

Dans la configuration représentée sur la figure 1, l'interface de séparation 133 du prisme de Wollaston 130 définit un plan de réparation qui est sécant avec le plan de sortie contenant les faces de sortie 111A, 112A des premier et deuxième prismes 111, 112 selon une droite qui est parallèle aux bases 111B, 112B des premier et deuxième prismes 111, 112.

Ainsi orienté, le prisme de Wollaston 130 génère, à partir du premier faisceau lumineux. divisé 1021 incident sur l'interface de séparation 133, deux faisceaux lumineux polarisés 1021A, 1021B émergents par la face de sortie 130B du prisme de Wollaston 130.

Les deux faisceaux lumineux polarisés 1021A, 1021B présentent les caractéristiques optiques suivantes :

- ils sont polarisés selon deux états de polarisation orthogonaux : ces deux états de polarisation correspondent ici à deux polarisations linéaires, perpendiculaires entre elles ;
- ils se propagent suivant deux directions de propagation différentes : ces deux directions de propagation sont séparées de l'angle de séparation du prisme de Wollaston, à savoir ici 2,65°.

De la même manière, le prisme de Wollaston 130 génère, à partir respectivement du deuxième faisceau lumineux divisé 1022 et du troisième faisceau lumineux divisé 1023, incidents chacun sur l'interface de séparation 133, deux faisceaux lumineux polarisés 1022A, 1022B et deux faisceaux lumineux polarisés 1023A, 1023B, émergents par la face de sortie 130B du prisme de Wollaston 130.

Les deux faisceaux lumineux polarisés 1022A, 1022B (respectivement deux faisceaux lumineux polarisés 1023A, 1023B) sont polarisés selon deux polarisations linéaires, perpendiculaires entre elles et se propagent suivant deux directions de propagation différentes séparées de l'angle de séparation du prisme de Wollaston 130.

Ainsi, le prisme de Wollaston 130 génère au total six faisceaux lumineux polarisés 1021A, 1021B, 1022A, 1022B, 1023A, 1023B.

L'angle de séparation du prisme de Wollaston 130 est tel que les six faisceaux lumineux polarisés 1021A, 1021B, 1022A, 1022B, 1023A, 1023B sont séparés spatialement et ne se recouvrent pas.

En variante, les moyens de séparation de la polarisation pourraient par exemple comprendre un prisme de Rochon, un prisme de Sénarmont, ou bien une lame d'onde diffractive (*diffractive wave plate* en anglais).

En variante encore, les moyens de séparation de la polarisation pourraient par exemple comprendre un réseau de diffraction à séparation de polarisation (*polarization gratings* en anglais) dont les traits sont orientés parallèlement au plan de séparation des faisceaux lumineux divisés. Le réseau de diffraction à séparation de polarisation sépare un faisceau lumineux divisé en deux faisceaux lumineux polarisés dont les états de polarisation sont orthogonaux. L'un des faisceaux lumineux polarisés, qui correspond au faisceau lumineux diffracté par exemple dans l'ordre+1 du réseau de diffraction, est polarisé suivant une polarisation circulaire gauche ; l'autre faisceau lumineux polarisé, qui correspond au faisceau lumineux diffracté dans l'ordre-1, est polarisé suivant une polarisation circulaire droite.

Les six faisceaux lumineux polarisés 1021A, 1021B, 1022A, 1022B, 1023A, 1023B sont ensuite repris par un deuxième système optique d'imagerie formée d'une deuxième lentille 104 convergente dont l'axe optique est confondu avec l'axe optique 103A de la première lentille 103 convergente.

La deuxième lentille convergente 104, de focale 20 mm, est placée le long de l'axe optique 103A de manière à ce que son foyer objet soit situé sur l'interface de séparation 133 du prisme de Wollaston 130. Les six faisceaux lumineux polarisés 1021A, 1021B, 1022A, 1022B, 1023A, 1023B sont donc réfractés par la deuxième lentille 104 de sorte qu'ils émergent de celle-ci selon six faisceaux lumineux formant six images de la fente source 101 séparées spatialement (voir figure 1).

Le dispositif d'analyse polarimétrique 100 décrit ci-dessus permet ainsi de former six images de la fente source 101, chacune de ces images étant 1,5 fois plus petite que la fente source 103 et séparées d'environ 0,9 mm.

Dans le plan de ces six images est placée une matrice plane de détecteurs 140 formée d'une barrette linéaire de six détecteurs 141 à 146. Cette pluralité de détecteurs 140 interceptent les six faisceaux lumineux polarisés 1021A, 1021B, 1022A, 1022B, 1023A, 1023B. Les tailles et espacements respectifs des six détecteurs 141 à 146 sont tels qu'un détecteur n'intercepte qu'un seul des six faisceaux lumineux polarisés 1021A, 1021B, 1022A, 1022B, 1023A, 1023B.

Par exemple, comme représenté sur la figure 1, le premier détecteur 141 intercepte le faisceau lumineux polarisé référencé 1022A, le deuxième détecteur 142 intercepte le faisceau lumineux polarisé référencé 1023A, etc.

Les six détecteurs 141 à 146 sont des détecteurs sensibles à l'intensité lumineuse qu'ils reçoivent. Ils délivrent ainsi chacun un signal relatif à l'intensité lumineuse du faisceau lumineux polarisé qu'il intercepte.

Les six signaux générés en sortie de la pluralité de détecteurs 141 à 146 sont alors transmis et collectés par des moyens de traitement 150 du dispositif d'analyse polarimétrique 100.

On décrira ci-après comment les moyens de traitement 150 exploitent les six signaux collectés pour déterminer l'état de polarisation du faisceau lumineux amont 102 à partir des intensités lumineuses des six faisceaux lumineux polarisés 1021A, 1021B, 1022A, 1022B, 1023A, 1023B.

Détermination de l'état de polarisation du faisceau lumineux amont

On notera respectivement $I_{1,+}$, $I_{1,-}$, $I_{2,+}$, $I_{2,-}$, $I_{3,+}$, $I_{3,-}$, les intensités lumineuses respectives des six faisceaux lumineux polarisés 1021A, 1021B, 1022A, 1022B, 1023A, 1023B.

Les moyens de traitement 150 déterminent les grandeurs $\delta_1$, $\delta_2$ et $\delta_3$ définies par :

$$\delta_1 = [I_{1,+} - I_{1,-}] / [I_{1,+} + I_{1,-}]$$

$$\delta_2 = [I_{2,+} - I_{2,-}] / [I_{2,+} + I_{2,-}]$$

$$\delta_3 = [I_{3,+} - I_{3,-}] / [I_{3,+} + I_{3,-}]$$

Ces trois grandeurs $\delta_1$, $\delta_2$ et $\delta_3$ sont donc respectivement associées aux trois faisceaux lumineux divisés 1021, 1022, 1023, les états de polarisation des deux faisceaux lumineux divisés 1021, 1022 ayant été respectivement modifiés par les lames biréfringentes 121 et 122.

Les moyens de traitement 150 déterminent également l'intensité totale $I_{tot}$ par :

$$I_{tot} = I_{1,+} + I_{1,-} + I_{2,+} + I_{2,-} + I_{3,+} + I_{3,-}.$$

De manière générale, l'état de polarisation du faisceau lumineux amont 102 est entièrement déterminé par la donnée de son vecteur de Stokes $\bar{s}$, qui peut s'écrire sous la forme réduite suivante : $\bar{S} = S_0 \begin{pmatrix} 1 \\ s_1 \\ s_2 \\ s_3 \end{pmatrix}$ ; $S_0$

étant égal à $I_{tot}$ et $\bar{s}_r = \begin{pmatrix} s_1 \\ s_2 \\ s_3 \end{pmatrix}$ étant le vecteur de Stokes réduit.

On peut alors montrer que : $\begin{pmatrix} \delta_1 \\ \delta_2 \\ \delta_3 \end{pmatrix} = M \begin{pmatrix} s_1 \\ s_2 \\ s_3 \end{pmatrix}$

où $\overline{\overline{M}}$ est la matrice de Mueller des moyens de modification de la polarisation 120 : $\overline{\overline{M}} = \begin{pmatrix} m_{11} & m_{12} & m_{13} \\ m_{21} & m_{22} & m_{23} \\ m_{31} & m_{32} & m_{33} \end{pmatrix}$.

On entendra par là que chaque ligne i (i = 1 ou 2) de la matrice $\overline{\overline{M}}$ vaut ($m_{i1}$ $m_{i2}$ $m_{i3}$), les trois coefficients $m_{i1}$, $m_{i2}$, $m_{i3}$ étant les coefficients de la matrice de Mueller de la première lame biréfringente 121 (si i = 1) ou de la deuxième lame biréfringente 122 (si i = 2).

La troisième ligne de la matrice $\overline{\overline{M}}$ est égale à (0 0 1), aucun élément ne modifiant la polarisation du troisième faisceau divisé 1023.

Les coefficients des matrices de Mueller des première et deuxième lames biréfringentes peuvent être mesurés avec précision au moyen d'un ellipsomètre ou bien d'un muellermètre.

Alternativement, en utilisant le dispositif d'analyse polarimétrique précédemment décrit pour mesurer l'état de polarisation d'un faisceau lumineux amont dont le vecteur de Stokes, et par la même son vecteur de Stokes réduit, est par ailleurs connu, les moyens de traitement en déduisent les coefficients de la matrice de Mueller des moyens de modification de la polarisation.

La méthode mise en oeuvre par les moyens de traitement 150 pour la détermination de l'état de polarisation du faisceau lumineux amont 102 à partir des intensités lumineuses des faisceaux lumineux polarisés 1021A, 1021B, 1022A, 1022B, 1023A, 1023B consiste donc à :

- déterminer, pour chacun des trois faisceaux lumineux divisés 1021 (respectivement 1022 et 1023), le rapport δ entre la différence et la somme des intensités lumineuses des deux faisceaux lumineux polarisés 1021A, 1021B (respectivement 1022A, 1022B et 1023A, 1023B), pour former le vecteurs $\bar{\delta}$, à partir des grandeurs $\delta_i$,
- déterminer la matrice de Mueller $\overline{\overline{M}}$ à partir de la mesure des matrices de Mueller de chacun des moyens de modification de la polarisation 121, 122, et
- déterminer l'intensité lumineuse totale $S_0$ des faisceaux lumineux polarisés,
- déterminer le vecteur de Stokes réduit $\bar{s}_r$ en inversant la relation $\bar{\delta} = \overline{\overline{M}} \bar{s}_r$, et
- en déduire le vecteur de Stokes, et donc l'état de polarisation, du faisceau lumineux amont 102.

On comprend ici l'avantage de cette méthode. En effet, le vecteur de Stokes réduit $s_r$ étant linéairement dépendant des grandeurs $\delta_i$, celui-ci est indépendant dés variations relatives d'intensité lumineuse des différents faisceaux lumineux divisés.

Avantageusement, chacun des moyens de modification de la polarisation intercepte une fraction du faisceau lumineux amont, cette fraction étant préférentiellement de l'ordre de 1/3.

De préférence, cette fraction peut être comprise entre 1/3 et 2/3

Bien que décrite dans une configuration où il n'y a que six faisceaux lumineux polarisés, cette méthode pourra être aisément généralisée au cas où 2*N faisceaux lumineux polarisés sont générés par les moyens de séparation de la polarisation.

Le dispositif d'analyse polarimétrique décrit ci-dessus peut rentrer dans la construction d'un spectropolarimètre. Pour cela, on remplace la matrice de détecteurs par un spectromètre imageur, par exemple le modèle référencé CP140 fabriqué par la société Jobin Yvon, associée à une caméra matricielle de telle sorte que les six images de la fente source soient formées sur la fente d'entrée du spectromètre imageur.

Le réseau de diffraction situé dans le spectromètre imageur crée dans le plan de la caméra matricielle six spectres, correspondant au spectre de chacune des six images de la fente source. Pour chaque longueur d'onde, on détermine selon la méthode précédente l'état de polarisation du faisceau lumineux amont.

Deuxième mode de réalisation

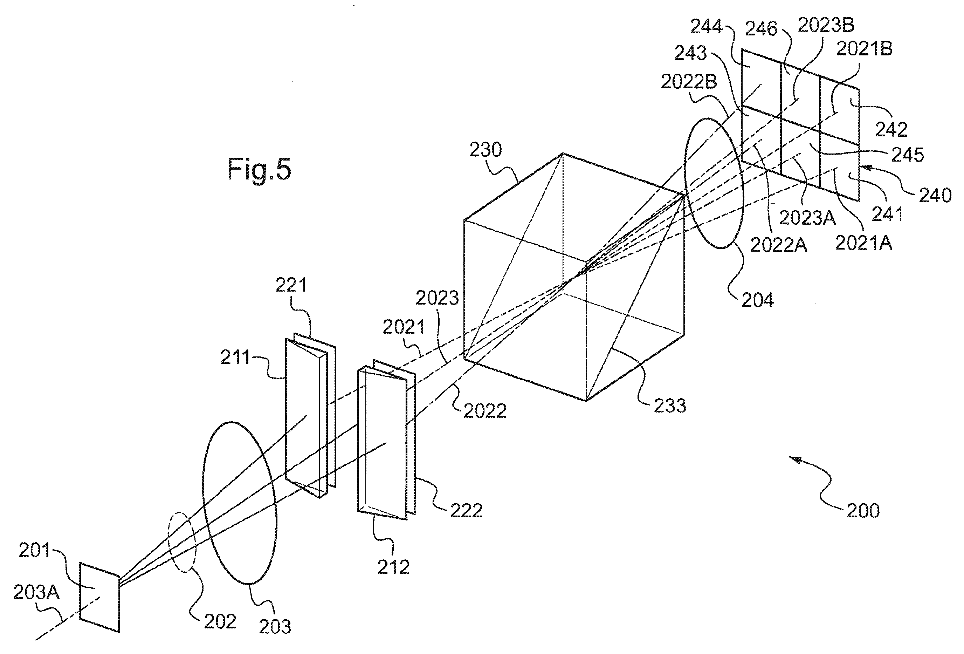

On a représenté sur la figure 5 un dispositif d'analyse polarimétrique 200 selon un second mode de réalisation de l'invention. On verra par la suite comment ce dispositif d'analyse polarimétrique 200 peut rentrer dans la construction d'une caméra polarimétrique.

Le dispositif d'analyse polarimétrique 200 est destiné à déterminer l'état de polarisation d'une image, dont on considère une partie, formée ici par le point source 201, dont est issu un faisceau lumineux amont 202.

On remarquera que le dispositif d'analyse polarimétrique 200 représenté sur la figure 5 ressemble fortement au dispositif d'analyse polarimétrique 100 selon le premier mode de réalisation.

En effet, le dispositif d'analysé polarimétrique 200 comporte :

- une première lentille convergente 203 d'axe optique 203A,
- des moyens de division du front d'onde comprenant également deux prismes 211, 212 symétriques par rapport à l'axe optique 203A,
- des moyens de modifications de la polarisation comprenant également une lame biréfringente demi-onde 221 et une lame biréfringente quart d'onde 222 respectivement placées derrière les deux prismes 211, 212,

- des moyens de séparation de la polarisation 230 comprenant également un prisme de Wollaston, et
- une deuxième lentille convergente 204 d'axe optique 203A.

Le dispositif d'analyse polarimétrique 200 diffère du dispositif d'analyse polarimétrique 100 du premier mode de réalisation par le fait que le prisme de Wollaston 230 a tourné d'un angle de 90° autour de l'axe optique 203A de sorte que l'interface de séparation 233 du prisme de Wollaston 230 définit un plan de séparation qui est sécant avec le plan de sortie contenant les faces de sortie 211A, 212A des premier et deuxième prismes 211, 212 selon une droite qui est perpendiculaire aux bases 211B, 212B des premier et deuxième prismes 211, 212.

Ainsi orientés, le prisme de Wollaston 230 sépare chacun des faisceaux lumineux divisés 2021, 2022, 2023 en deux faisceaux lumineux polarisés de manière à générer six faisceaux lumineux polarisés 2021A, 2021B, 2022A, 2022B, 2023A, 2023B répartis sur plusieurs lignes et plusieurs colonnes.

Le dispositif d'analyse polarimétrique 200 comporte en outre une matrice plane 240 de détecteurs 241 à 246 formée ici d'une matrice à trois lignes et deux colonnes planes interceptant les six faisceaux lumineux polarisés 2021A, 2021B, 2022A, 2022B, 2023A, 2023B.

Comme représenté sur la figure 5, les détecteurs 241 à 246 sont répartis dans l'espace de telle sorte qu'un détecteur n'intercepte qu'un seul des six faisceaux lumineux polarisés 2021A, 2021B, 2022A, 2022B, 2023A, 2023B pour délivrer six signaux relatifs à l'intensité lumineuse de chacun de ces six faisceaux interceptés.

Le dispositif d'analyse polarimétrique 200 comporte enfin des moyens de traitement (non représentés) identiques aux précédents qui collectent les six signaux en sortie de la matrice de détecteurs 240 et déterminent l'état de polarisation du faisceau lumineux amont 202 à partir des intensités lumineuses des six faisceaux lumineux polarisés 2021A, 2021B, 2022A, 2022B, 2023A, 2023B.

Le dispositif d'analyse polarimétrique 200 de la figure 5 peut entrer avantageusement dans la construction d'une caméra polarimétrique pour analyser l'état de polarisation d'une image.

La caméra polarimétrique est constituée d'un diaphragme, d'un prisme à trois pans tel que celui de la figure 2 dont les faces de sorties des pans inclinées comportent des films à rotation de polarisation, d'un prisme de Wollaston et d'un système d'imagerie (objectif et caméra). L'image est placée à l'aide de la première lentille convergente, afin que les rayons du faisceau lumineux amont soient collimatés. Le diaphragme permet de réduire le champ de vision afin d'éviter le recouvrement d'images.

Le prisme à trois pans munis des films à rotation de polarisation reproduit l'image en trois exemplaires, et modifie les états de polarisation issues de deux des trois exemplaires, et les dévie dans des directions différentes.

Le prisme de Wollaston sépare ensuite les deux polarisations orthogonales linéaires dans deux directions différentes, orthogonalement à la séparation du prisme à trois pans de préférence.

La lumière étant polarisée linéaire en sortie du prisme de Wollaston, il est possible d'ajouter une lame quart d'onde pour ne pas être gêné par la sensibilité du capteur à la polarisation.

Chaque exemplaire de la même image ayant une direction différente sera focalisée à l'aide de la deuxième lentille convergente sur une portion différente d'un capteur matriciel de type capteur CCD par exemple.

Les six images obtenues possèdent des informations de polarisation différentes qui seront traduites en intensité lumineuse.

Une analyse par des moyens de traitement permettra d'extraire les informations sur l'état de polarisation de l'image d'origine.

Dans un autre mode de réalisation, le dispositif d'analyse polarimétrique peut rentrer dans la construction d'un microscope optique pour permettre la mesure du vecteur de Jones de la lumière transmise par un échantillon. En effet, on sait bien définir le vecteur de Jones d'un faisceau complètement polarisé à partir de son vecteur de Stokes.

Pour cela, on place des moyens de division du front d'onde et des moyens de modification de la polarisation suivis d'un prisme de Wollaston entre le plan focal arrière de l'objectif et la gentille de tube du microscope optique. Dans cette configuration, le dispositif d'analyse polarimétrique comporte un premier système optique d'imagerie formé de l'objectif de microscope et un deuxième système optique d'imagerie formé par la lentille de tube, ou par la lentille de tube associée à l'objéctif d'une caméra numérique de type CCD dont la matrice plane de détecteurs serait alors placée dans le plan focal image du deuxième système optique d'imagerie.

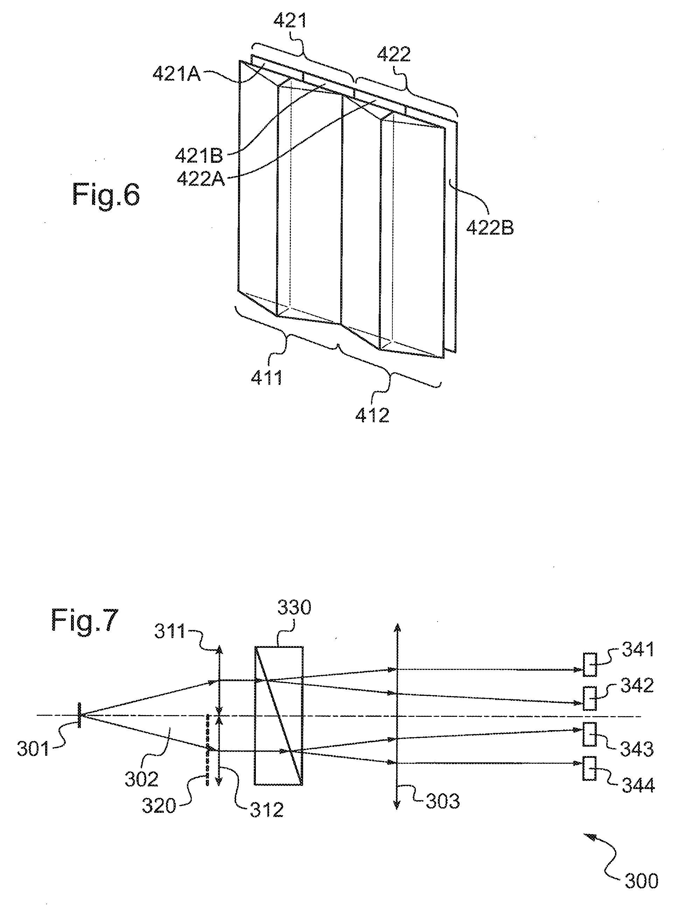

Il peut être avantageux d'utiliser des moyens de division du front d'onde et des moyens de modification de la polarisation tels que ceux représentés sur la figure 6. Les moyens de division du front d'onde comportent deux paires de prismes 411, 412 identiques accolés par leurs bases. Les moyens de modification de la polarisation comprennent deux paires de lames biréfringentes différentes, par exemple une lame de type A 421A, 422A qui est par exemple une lame à retard quart d'onde et une lame de type B 421B, 422B qui est par exemple une lame à retard demi-onde. Les deux lames de type A sont accolées à la face de sortie de deux prismes de même orientation, alors que les deux lames de type B sont accolées à la face de sortie de deux autres prismes d'orientation symétrique.

Le fait que les moyens de division du front d'onde les moyens de modification de la polarisation définissent plusieurs régions disjointes est utile pour éviter le vignetage des images. Pour réduire le champ observé et éviter que les quatre images ne se chevauchent, on pourra avantageusement limiter la zone illuminée en réglant le diaphragme de champ du bras d'illumination du microscope, pour n'éclairer qu'une zone réduite.

Dans un autre mode de réalisation du dispositif d'analyse, polarimétrique 300 représenté sur la figure 7, les moyens de modification de la polarisation 320 sont placés en amont des moyens de division du front d'onde.

Les moyens de modification de la polarisation 320 comprennent ici une unique lame biréfringente modifiant de manière uniforme l'état de polarisation des rayons d'un faisceau lumineux amont 302 sans modifier leur intensité lumineuse. Le faisceau lumineux amont 302 est issu d'une fente objet 301.

Les moyens de division du front d'onde comprennent une première lentille 311 et une deuxième lentille 312 convergentes minces de même distance focale, placées côte à côte, dans un même plan situé derrière la lame biréfringente 320 de sorte que la deuxième lentille 312 intercepte tous les rayons du faisceau lumineux amont 302 ayant traversé la lame biréfringente 320.

Le dispositif d'analyse polarimétrique 300 comporte également un prisme de Wollaston 330 réalisant une deuxième séparation des faisceaux lumineux divisés et une troisième lentille 303 qui permet de former quatre images de la fente objet 301 dans son plan focal qui contient quatre détecteurs 341, 342, 343, 344 mesurant l'intensité lumineuse de chacun des faisceaux lumineux polarisés. Des moyens de traitement (non représentés) analysent ces mesures pour déterminer l'état de polarisation du faisceau lumineux amont 302.

**Revendications**

1. Dispositif d'analyse polarimétrique (100 ; 200 ; 300) à division de front d'onde pour déterminer l'état de polarisation d'un faisceau lumineux amont (102 ; 202 ; 302) issu d'une source lumineuse, **caractérisé en ce qu'**il comporte :

   - des moyens de division du front d'onde (110 ; 211, 212 ; 311, 312) dudit faisceau lumineux amont (102 ; 202 ; 302) adaptés à diviser ledit faisceau lumineux amont (102 ; 202 ; 302) en N faisceaux lumineux divisés (1021, 1022, 1023 ; 2021, 2022, 2023), où N représente un nombre entier supérieur ou égal à deux, chacun des N faisceaux lumineux divisés (1021, 1022, 1023 ; 2021, 2022, 2023) se propageant suivant une direction de propagation formant un angle de déviation avec la direction de propagation du faisceau lumineux amont (102 ; 202 ; 302), les N angles de déviation étant tous différents de telle sorte que lesdits N faisceaux lumineux divisés (1021, 1022, 1023 ; 2021, 2022, 2023) soient séparés angulairement,
   - des moyens de modification de la polarisation (120 ; 221, 222 ; 320) adaptés à modifier l'état de polarisation de chacun desdits au moins (N-1) faisceaux lumineux divisés, de telle sorte que lesdits N faisceaux lumineux divisés soient polarisés selon des états de polarisation tous différents,

- des moyens de séparation de polarisation (130 ; 230 ; 330) disposés de manière à intercepter lesdits N faisceaux lumineux divisés (1021, 1022, 1023 ; 2021, 2022, 2023) et adaptés à générer, à partir de chacun desdits N faisceaux lumineux divisés (1021, 1022, 1023 ; 2021, 2022, 2023), deux faisceaux lumineux polarisés selon deux états de polarisation orthogonaux et suivant deux directions de propagation différentes, de manière à générer 2*N faisceaux lumineux polarisés (1021A, 1021B, 1022A, 1022B, 1023A, 1023B; 2021A, 2021 B, 2022A, 2022B, 2023A, 2023B),

- une pluralité (140 ; 240) de détecteurs (141, 142, 143, 144, 145, 146 ; 241, 242, 243, 244, 245, 246; 341, 342, 343, 344) interceptant lesdits 2*N faisceaux lumineux polarisés (1021A, 1021B, 1022A, 1022B, 1023A, 1023B; 2021A, 2021B, 2022A, 2022B, 2023A, 2023B) et disposée de telle sorte qu'un détecteur n'intercepte qu'un seul desdits 2*N faisceaux lumineux polarisés (1021A, 1021 B, 1022A, 1022B, 1023A, 1023B; 2021A, 2021 B, 2022A, 2022B, 2023A, 2023B), ladite pluralité (140 ; 240) de détecteurs (141, 142, 143, 144, 145, 146 ; 241, 242, 243, 244, 245, 246 ; 341, 342, 343, 344) délivrant 2*N signaux relatifs à l'intensité lumineuse de chacun des 2*N faisceaux lumineux polarisés (1021 A, 1021 B, 1022A, 1022B, 1023A, 1023B ; 2021 A, 2021 B, 2022A, 2022B, 2023A, 2023B) interceptés par lesdits détecteurs (141, 142, 143, 144, 145, 146 ; 241, 242, 243, 244, 245, 246 ; 341, 342, 343, 344), et

- des moyens de traitement (150) adaptés à collecter lesdits 2*N signaux en sortie de ladite pluralité (140 ; 240) de détecteurs (141, 142, 143, 144, 145, 146 ; 241, 242, 243, 244, 245, 246 ; 341, 342, 343, 344) pour déterminer l'état de polarisation dudit faisceau lumineux amont (102 ; 202 ; 302) à partir desdites intensités lumineuses des 2*N faisceaux lumineux polarisés (1021 A, 1021 B, 1022A, 1022B, 1023A, 1023B ; 2021 A, 2021 B, 2022A, 2022B, 2023A, 2023B).

2. Dispositif d'analyse polarimétrique (100 ; 200 ; 300) à division de front d'onde selon la revendication 1, dans lequel lesdits moyens de division du front d'onde (110 ; 211, 212 ; 311, 312) comprennent au moins N-1 prisme(s) (111, 112 ; 211, 212 ; 411, 412) ou au moins N-1 lentille(s) (311, 312).

3. Dispositif d'analyse polarimétrique (100 ; 200 ; 300) à division de front d'onde selon la revendication 1 ou 2, dans lequel lesdits moyens de modification de la polarisation (120 ; 221, 222 ; 320) comprennent au moins N-1 lame(s) biréfringente(s) (121, 122 ; 221, 222 ; 320 ; 421 A, 421 B, 422A, 422B).

4. Dispositif d'analyse polarimétrique (100 ; 200 ; 300) à division de front d'onde selon l'une des revendications 1 à 3, dans lequel chacun desdits moyens de modification de la polarisation (120 ; 221, 222 ; 320) intercepte une fraction dudit faisceau lumineux amont (102 ; 202 ; 302), cette fraction étant préférentiellement de l'ordre de 1/N, et encore plus préférentiellement comprise entre 1 / (3*N) et (2*N+1 ) / (3*N).

5. Dispositif d'analyse polarimétrique (100 ; 200 ; 300) à division de front d'onde selon l'une des revendications 1 à 4, dans lequel lesdits angles de déviation avec la direction de propagation du faisceau lumineux amont (102 ; 202 ; 302) sont compris entre -15° et +15°, préférentiellement entre -7° et +7°.

6. Dispositif d'analyse polarimétrique (100 ; 200 ; 300) à division de front d'onde selon l'une des revendications 1 à 5, dans lequel les moyens de séparation de polarisation (130 ; 230 ; 330) comprennent un prisme de Wollaston (130 ; 230 ; 330), un prisme de Rochon, un prisme de Sénarmont, une lame d'onde diffractive ou un réseau de diffraction à séparation de polarisation.

7. Dispositif d'analyse polarimétrique (100 ; 200 ; 300) à division de front d'onde selon l'une des revendications 1 à 6, comportant au moins un système optique d'imagerie (103, 104 ; 203, 204, 304) placé entre ledit faisceau lumineux amont (102 ; 202 ; 302) et lesdits moyens de division du front d'onde (110 ; 211, 212) et/ou entre lesdits moyens de séparation de polarisation (130 ; 230 ; 330) et ladite pluralité (140 ; 240) de détecteurs (141, 142, 143, 144, 145, 146 ; 241, 242, 243, 244, 245, 246 ; 341, 342, 343, 344).

8. Dispositif d'analyse polarimétrique (100 ; 200) à division de front d'onde selon la revendication 7, comportant un premier système optique d'imagerie (103, 203) placé entre ledit faisceau lumineux amont (102 ; 202) et lesdits moyens de division du front d'onde (110 ; 211, 212) et un second système optique d'imagerie (104, 204) placé entre lesdits moyens de séparation de polarisation (130 ; 230) et ladite pluralité (140 ; 240) de détecteurs (141, 142, 143, 144, 145, 146 ; 241, 242, 243, 244, 245, 246), et dans lequel :

   - N est égal à trois,
   - lesdits moyens de division du front d'onde (110 ; 211, 212) comprennent deux prismes (111, 112 ; 211, 212),
   - lesdits moyens de modification de la polarisation (120 ; 221, 222) comprennent deux lames biréfringentes (121, 122 ; 221, 222),

- lesdits moyens de séparation de polarisation (130 ; 230) comprennent un prisme de Wollaston (130 ; 230),

- ladite pluralité (140 ; 240) de détecteurs (141, 142, 143, 144, 145, 146 ; 241, 242, 243, 244, 245, 246) forme une matrice plane de détecteurs coplanaires,

- ledit premier système d'imagerie optique (103 ; 203) et ledit second système d'imagerie optique (104 ; 204) sont agencées de manière à former six images de ladite source lumineuse dans le plan de ladite matrice plane de détecteurs, et

- lesdits moyens de traitement (150) sont adaptés pour calculer les paramètres du vecteur de Stokes du faisceau lumineux amont (102 ; 202) à partir des six images détectées.

9. Spectropolarimètre comportant un dispositif d'analyse polarimétrique (100) selon l'une des revendications 1 à 8.

10. Caméra polarimétrique comportant un dispositif d'analyse polarimétrique (200) selon l'une des revendications 1 à 8.

11. Microscope optique comportant un dispositif d'analyse polarimétrique selon l'une des revendications 1 à 8.

12. Procédé d'analyse polarimétrique à division de front d'onde pour la détermination de l'état de polarisation d'un faisceau lumineux amont (102 ; 202 ; 302) comportant les étapes suivantes :

- former, à partir du faisceau lumineux amont (102 ; 202; 302), grâce à des moyens d'analyse polarimétrique (103, 110, 120, 130, 104 ; 203, 211, 212, 221, 222, 204 ; 320, 311, 312, 330, 303), N paires de deux faisceaux lumineux polarisés (1021 A, 1021B, 1022A, 1022B, 1023A, 1023B; 2021 A, 2021 B, 2022A, 2022B, 2023A, 2023B), lesdites N paires formant 2*N faisceaux lumineux polarisés, lesdits 2*N faisceaux lumineux polarisés (1021 A, 1021 B, 1022A, 1022B, 1023A, 1023B; 2021 A, 2021 B, 2022A, 2022B, 2023A, 2023B) présentant des états de polarisation différents, et lesdits deux faisceaux lumineux polarisés de chaque paire présentant des états de polarisation orthogonaux ;

- déterminer les intensités lumineuses des 2*N faisceaux lumineux polarisés (1021A, 1021 B, 1022A, 1022B, 1023A, 1023B; 2021A, 2021B, 2022A, 2022B, 2023A, 2023B),

- déterminer pour chacune des N paires de deux faisceaux lumineux polarisés, le rapport $\delta_i$, où i

= 1, 2, ..., N, entre la différence et la somme des intensités lumineuses desdits deux faisceaux lumineux polarisés de la i-ème paire pour former le vecteur $\overline{\delta}$, à partir des rapports $\delta_i$,

- déterminer la matrice de Mueller $\overline{\overline{M}}$ des moyens d'analyse polarimétrique (103, 110, 120, 130, 104 ; 203, 211, 212, 221, 222, 204 ; 320, 311, 312, 330, 303),

- déterminer l'intensité lumineuse totale $S_0$ des 2*N faisceaux lumineux polarisés (1021A, 1021B, 1022A, 1022B, 1023A, 1023B; 2021A, 2021B, 2022A, 2022B, 2023A, 2023B),

- déterminer le vecteur de Stokes réduit $\overline{s_r}$, en inversant la relation $\overline{\delta} = \overline{\overline{M}}\, \overline{s_r}$ et

- en déduire l'état de polarisation du faisceau lumineux amont (102 ; 202 ; 302).

**Patentansprüche**

1. Polarimetrische Analysevorrichtung (100; 200; 300) mit Wellenfrontteilung zum Bestimmen des Polarisationszustands eines davor auftretenden, von einer Lichtquelle ausgehenden Lichtstrahls (102; 202; 302),
**dadurch gekennzeichnet, daß** sie

- Mittel zur Teilung der Wellenfront {110; 211, 212; 311, 312) des davor auftretenden Lichtstrahls (102; 202; 302), die geeignet sind, den davor auftretenden Lichtstrahl (102; 202; 302) in N Teillichtstrahlen (1021, 1022, 1023; 2021, 2022, 2023) zu teilen, wobei N eine ganze Zahl größer oder gleich zwei ist, wobei sich jeder der N Teillichtstrahlen (1021, 1022, 1023; 2021, 2022, 2023) in einer Ausbreitungsrichtung ausbreitet, die mit der Ausbreitungsrichtung des davor auftretenden Lichtstrahls (102; 202; 302) einen Ablenkungswinkel bildet, wobei die N Ablenkungswinkel alle unterschiedlich sind, so daß die N Teillichtstrahlen (1021, 1022, 1023; 2021, 2022, 2023) winkelmäßig getrennt sind,

- Mittel zur Änderung der Polarisation (120; 221, 222; 320), die geeignet sind, den Polarisationszustand jedes der wenigstens (N-1) Teillichtstrahlen zu ändern, so daß die N Teillichtstrahlen gemäß Polarisationszuständen polarisiert sind, die alle unterschiedlich sind,

- Mittel zum Trennen der Polarisation (130; 230; 330), die derart angeordnet sind, daß sie die N Teillichtstrahlen (1021, 1022, 1023; 2021, 2022, 2023) abfangen, und geeignet sind, von jedem der N Teillichtstrahlen (1021, 1022, 1023; 2021, 2022, 2023) ausgehend zwei polarisierte Lichtstrahlen mit zueinander rechtwinkliger Polarisation und mit zwei verschiedenen Ausbreitungsrichtungen zu erzeugen, so daß 2N polarisierte Lichtstrahlen (1021A, 1021B, 1022A, 1022B, 1023A, 1023B; 2021A, 2021B; 2022A, 2022B; 2023A, 2023B) erzeugt werden,

- eine Vielzahl (140; 240) von Detektoren (141, 142, 143, 144, 145, 146; 241, 242, 243, 244, 245, 246; 341, 342, 343, 344), die die 2N polarisierten Lichtstrahlen (1021A, 1021B, 1022A, 1022B, 1023A, 1023B; 2021A, 2021B; 2022A, 2022B; 2023A, 2023B) abfangen und derart angeordnet sind, daß ein Detektor nur einen einzigen der 2N polarisierten Lichtstrahlen (1021A, 1021B, 1022A, 1022B, 1023A, 1023B; 2021A, 2021B; 2022A, 2022B; 2023A, 2023B) abfängt, wobei die Vielzahl (140; 240) von Detektoren (141, 142, 143, 144, 145, 146; 241, 242, 243, 244, 245, 246; 341, 342, 343, 344) 2N Signale bezüglich der Lichtstärke jedes der von den Detektoren (141, 142, 143, 144, 145, 146; 241, 242, 243, 244, 245, 246; 341, 342, 343, 344) abgefangenen 2N polarisierten Lichtstrahlen (1021A, 1021B, 1022A, 1022B, 1023A, 10238; 2021A, 2021B; 2022A, 2022B; 2023A, 2023B) liefert, und

- Verarbeitungsmittel (150), die geeignet sind, die 2N Signale am Ausgang der Vielzahl (140; 240) von Detektoren (141, 142, 143, 144, 145, 146; 241, 242, 243, 244, 245, 246; 341, 342, 343, 344) zu sammeln, um den Polarisationszustand des davor auftretenden Lichtstrahls (102; 202; 302) von den Lichtstärken der 2N polarisierten Lichtstrahlen (1021A, 1021B, 1022A, 1022B, 1023A, 1023B; 2021A, 2021B; 2022A, 2022B; 2023A, 2023B) ausgehend zu bestimmen,

aufweist.

2. Polarimetrische Analysevorrichtung (100; 200; 300) mit Wellenfrontteilung gemäß Anspruch 1, bei der die Mittel zur Teilung der Wellenfront (110; 211, 212; 311, 312) wenigstens N-1 Prismen (111, 112; 211, 212; 411, 412) oder N-1 Linsen (311, 312) aufweisen.

3. Polarimetrische Analysevorrichtung (100; 200; 300) mit Wellenfrontteilung gemäß Anspruch 1 oder 2, bei der die Mittel zur Änderung der Polarisation (120; 221, 222; 320) wenigstens N-1 doppelbrechende Platten (121, 122; 221, 222; 320; 421A, 421B, 422A, 422B) aufweisen.

4. Polarimetrische Analysevorrichtung (100; 200; 300) mit Wellenfrontteilung gemäß einem der Ansprüche 1 bis 3, bei der jedes der Mittel zur Änderung der Polarisation (120; 221, 222; 320) einen Teil des davor auftretenden Lichtstrahls (102; 202; 302) abfängt, wobei dieser Teil vorzugsweise von der Größenordnung 1/N und besonders bevorzugt zwischen 1/(3N) und (2N+1)/(3N) ist.

5. Polarimetrische Analysevorrichtung (100; 200; 300) mit Wellenfrontteilung gemäß einem der Ansprüche 1 bis 4, bei der die Ablenkungswinkel mit der Ausbreitungsrichtung des davor auftretenden Lichtstrahls (102; 202; 302) zwischen -15° und +15°, vorzugsweise zwischen -7° und +7°, betragen.

6. Polarimetrische Analysevorrichtung (100; 200; 300) mit Wellenfrontteilung gemäß einem der Ansprüche 1 bis 5, bei der die Mittel zum Trennen der Polarisation (130; 230; 330) ein Wollaston-Prisma (130; 230; 330), ein Rochon-Prisma, ein Senarmont-Prisma, eine wellenbrechende Platte oder ein Brechungsgitter mit Polarisationstrennung aufweisen.

7. Polarimetrische Analysevorrichtung (100; 200; 300) mit Wellenfrontteilung gemäß einem der Ansprüche 1 bis 6, die wenigstens ein optisches Abbildungssystem (103, 104; 203, 204; 304) aufweist, das zwischen dem davor auftretenden Lichtstrahl (102; 202; 302) und den Mitteln zur Teilung der Wellenfront (110; 211, 212) und/oder zwischen den Mitteln zum Trennen der Polarisation (130; 230; 330) und der Vielzahl (140; 240) von Detektoren (141, 142, 143, 144, 145, 146; 241, 242, 243, 244, 245, 246; 341, 342, 343, 344) angeordnet ist.

8. Polarimetrische Analysevorrichtung (100; 200) mit Wellenfrontteilung gemäß Anspruch 7, die ein erstes optisches Abbildungssystem (103, 203), das zwischen dem davor auftretenden Lichtstrahl (102; 202) und den Mitteln zur Teilung der Wellenfront (110; 211, 212) angeordnet ist, und ein zweites optisches Abbildungssystem (104, 204), das zwischen den Mitteln zum Trennen der Polarisation (130; 230) und der Vielzahl (140; 240) von Detektoren (141, 142, 143, 144, 145, 146; 241, 242, 243, 244, 245, 246) angeordnet ist, aufweist und bei der

   - N gleich drei ist,
   - die Mittel zur Teilung der Wellenfront (110; 211, 212) zwei Prismen (111, 112; 211, 212) aufweisen,
   - die Mittel zur Änderung der Polarisation (120; 221, 222) zwei doppeltbrechende Platten (121, 122; 221, 222) aufweisen, die Mittel zum Trennen der Polarisation (130; 230) ein Wollaston-Prisma (130; 230) aufweisen,
   - die Vielzahl (140; 240) von Detektoren (141, 142, 143, 144, 145, 146; 241, 242, 243, 244, 245, 246) eine ebene Matrix von koplanaren Detektoren bildet,
   - das erste optische Abbildungssystem (103, 203) und das zweite optische Abbildungssystem (104, 204) derart angeordnet sind, daß sie sechs Bilder der besagten Lichtquelle in der Ebene der Matrix von koplanaren Detektoren bilden, und
- die Verarbeitungsmittel (150) geeignet sind, von den sechs erfaßten Bildern die Parameter des Stokes-Vektors des davor auftretenden Lichtstrahls (102; 202; 302) zu berechnen.

9. Spektropolarimeter, das eine polarimetrische Analysevorrichtung (100) gemäß einem der Ansprüche 1 bis 8 aufweist.

10. Polarimetrische Kamera, die eine polarimetrische Analysevorrichtung (200) gemäß einem der Ansprüche 1 bis 8 aufweist.

11. Optisches Mikroskop, das eine polarimetrische Analysevorrichtung gemäß einem der Ansprüche 1 bis 8 aufweist.

12. Verfahren für eine polarimetrische Analyse mit Wellenfrontteilung zum Bestimmen des Polarisationszustands eines davor auftretenden Lichtstrahls (102; 202; 302), das die folgenden Schritte aufweist:

- vom davor auftretenden Lichtstrahl (102; 202; 302) ausgehend und mit Mitteln zur polarimetrischen Analyse (103, 110, 120, 130, 104; 203, 211, 212, 221, 222, 204; 320, 311, 312, 330, 303), Bilden von N Paaren aus zwei polarisierten Lichtstrahlen (1021A, 1021B, 1022A, 1022B, 1023A, 1023B; 2021A, 2021B; 2022A, 2022B; 2023A, 2023B), wobei die N Paare 2N polarisierte Lichtstrahlen bilden, wobei die 2N polarisierten Lichtstrahlen (1021A, 1021B, 1022A, 1022B, 1023A, 1023B; 2021A, 2021B; 2022A, 2022B; 2023A, 2023B) unterschiedliche Polarisationszustände aufweisen und die beiden polarisierten Lichtstrahlen jedes Paares zueinander rechtwinklige Polarisationszustände aufweisen,
- Bestimmen der Lichtstärken der 2N polarisierten Lichtstrahlen (1021A, 1021B, 1022A, 1022B, 1023A, 1023B; 2021A, 2021B; 2022A, 2022B; 2023A, 2023B),
- für jedes der N Paare aus zwei polarisierten Lichtstrahlen, Bestimmen des Verhältnisses $\delta_i$, wobei i = 1, 2, ..., N ist, zwischen der Differenz und der Summe der Lichtstärke der beiden polarisierten Lichtstrahlen des i-ten Paars, um aus den Verhältnissen $\delta_i$ den Vektor $\overline{\delta}$ zu bilden,
- Bestimmen der Müllerschen Matrix $\overline{\overline{M}}$ der Mittel zur polarimetrischen Analyse (103, 110, 120, 130, 104; 203, 211, 212, 221, 222, 204; 320, 311, 312, 330, 303),
- Bestimmen der Gesamtlichtstärke $S_0$ der 2N polarisierten Lichtstrahlen (1021A, 1021B, 1022A, 1022B, 1023A, 1023B; 2021A, 2021B; 2022A, 2022B; 2023A, 2023B),

- Bestimmen des reduzierten Stokes-Vektors $\overline{s}_r$ durch Inversion der Beziehung $\delta = \overline{\overline{M}} \ \overline{s}_r$ und
- daraus den Polarisationszustand des davor auftretenden Lichtstrahls (102; 202; 302) ableiten.

**Claims**

1. A wavefront-division polarimetric analysis device (100; 200; 300) to determine the polarisation state of an upstream light beam (102; 202; 302) coming from a light source, **characterized in that** it includes:

- means (110; 211, 212, 311, 312) for dividing the wavefront of said upstream light beam (102; 202; 302), adapted to split said upstream light beam (102; 202; 302) into N split light beams (1021, 1022, 1023; 2021, 2022, 2023), where N is an integer higher than or equal to two, each of the N split light beams (1021, 1022, 1023; 2021, 2022, 2023) propagating along a direction of propagation forming an angle of deviation with the direction of propagation of the upstream light beam (102; 202; 302), the N deviation angles being all different, such that said N split light beams (1021, 1022, 1023; 2021, 2022, 2023) are angularly separated,
- polarisation modification means (120; 221, 222; 320) adapted to modify the polarisation state of each of said at least (N-1) split light beams, such that said N split light beams are polarised according to polarisation states that are all different,
- polarisation separation means (130; 230; 330), arranged so as to intercept said N split light beams (1021, 1022, 1023; 2021, 2022, 2023), and adapted to generate, from each of said N split light beams (1021, 1022, 1023; 2021, 2022, 2023), two light beams polarised according to two orthogonal polarisation states and along two different directions of propagation, so as to generate 2*N polarised light beams (1021A, 1021B, 1022A, 1022B, 1023A, 1023B; 2021A, 2021B, 2022A, 2022B, 2023A, 2023B),
- a plurality (140; 240) of detectors (141, 142, 143, 144, 145, 146; 241, 242, 243, 244, 245, 246; 341, 342, 343, 344) intercepting said 2*N polarised light beams (1021A, 1021B, 1022A, 1022B, 1023A, 1023B; 2021A, 2021B, 2022A, 2022B, 2023A, 2023B) and arranged in such a manner that one detector intercepts only one of said 2*N polarised light beams (1021A, 1021B, 1022A, 1022B, 1023A, 1023B; 2021A, 2021B, 2022A, 2022B, 2023A, 2023B), said plurality (140; 240) of detectors (141, 142, 143, 144, 145, 146; 241, 242, 243, 244, 245, 246; 341, 342, 343, 344) delivering 2*N signals relating to the luminous intensity of each of the 2*N polarised light beams (1021A, 1021B, 1022A, 1022B, 1023A, 1023B; 2021A, 2021B, 2022A, 2022B, 2023A, 2023B) intercepted by said detectors (141, 142, 143, 144, 145, 146; 241, 242, 243, 244, 245, 246; 341, 342, 343, 344), and
- processing means (150) adapted to collect said 2*N signals at the output of said plurality (140; 240) of detectors (141, 142, 143, 144, 145, 146; 241, 242, 243, 244, 245, 246; 341, 342, 343, 344) to determine the polarisation state of said upstream light beam (102; 202; 302) from said luminous intensities of the 2*N polarised light beams (1021A, 1021B, 1022A, 1022B, 1023A, 1023B; 2021A, 2021B, 2022A, 2022B, 2023A, 2023B).

2. The wavefront-division polarimetric analysis device (100; 200; 300) according to claim 1, wherein said wavefront-division means (110; 211, 212; 311, 312) comprise at least N-1 prism(s) (111, 112; 211, 212; 411, 412) or at least N-1 lens(es) (311, 312).

3. The wavefront-division polarimetric analysis device (100; 200; 300) according to claim 1 or 2, wherein said polarisation modification means (120; 221, 222; 320) comprise at least N-1 birefringent plate(s) (121, 122; 221, 222; 320; 421A, 421B, 422A, 422B).

4. The wavefront-division polarimetric analysis device (100; 200; 300) according to one of claims 1 to 3, wherein each of said polarisation modification means (120; 221, 222; 320) intercepts a fraction of said upstream light beam (102; 202; 302), this fraction being preferentially of the order of 1/N, and still more preferentially comprised between 1 / (3*N) and (2*N+1) / (3*N).

5. The wavefront-division polarimetric analysis device (100; 200; 300) according to one of claims 1 to 4, wherein said angles of deviation with the direction of propagation of the upstream light beam (102; 202; 302) are comprised between -15° and +15°, preferentially between -7° and +7°.

6. The wavefront-division polarimetric analysis device (100; 200; 300) according to one of claims 1 to 5, wherein the polarisation separation means (130; 230; 330) comprise a Wollaston prism (130; 230; 330), a Rochon prism, a Sénarmont prism, a diffractive-wave plate or a polarisation-separation diffraction grating.

7. The wavefront-division polarimetric analysis device (100; 200; 300) according to one of claims 1 to 6, comprising at least one optical imaging system (103, 104; 203, 204; 304) placed between the upstream light beam (102; 202; 302) and said wavefront-division means (110; 211, 212) and/or between said polarisation separation means (130; 230; 330) and said plurality (140; 240) of detectors (141, 142, 143, 144, 145, 146; 241, 242, 243, 244, 245, 246; 341, 342, 343, 344).

8. The wavefront-division polarimetric analysis device (100; 200) according to claim 7, including a first optical imaging system (103, 203), placed between said upstream light beam (102; 202) and said wavefront-division means (110; 211, 212) and a second optical imaging system (104, 204) placed between said polarisation separation means (130; 230) and said plurality (140; 240) of detectors (141, 142, 143, 144, 145, 146; 241, 242, 243, 244, 245, 246), and wherein:

- N is equal to three,
- said wavefront-division means (110; 211, 212) comprise two prisms (111, 112; 211, 212),
- said polarisation modification means (120; 221, 222) comprise two birefringent plates (121, 122; 221, 222),
- said polarisation separation means (130; 230) comprise a Wollaston prism (130; 230),
- said plurality (140; 240) of detectors (141, 142, 143, 144, 145, 146; 241, 242, 243, 244, 245, 246) form a planar array of coplanar detectors,
- said first optical imaging system (103; 203) and said second optical imaging system (104; 204) are arranged is such a manner to form six images of said light source in the plane of said planar array of detectors, and
- said processing means (150) are adapted to calculate the parameters of the Stokes vector of the upstream light beam (102; 202) from the six detected images.

9. A spectropolarimeter including a polarimetric analysis device (100) according to one of claims 1 to 8.

10. A polarimetric camera including a polarimetric analysis device (200) according to one of claims 1 to 8.

11. An optical microscope including a polarimetric analysis device according to one of claims 1 to 8.

12. A wavefront-division polarimetric analysis method for determining the polarisation state of an upstream light beam (102; 202; 302), including the following steps:

- forming, from said upstream light beam (102; 202; 302), thanks to polarimetric analysis means (103, 110, 120, 130, 104; 203, 211, 212, 221, 222, 204; 320, 311, 312, 330, 303), N pairs of two polarised light beams (1021A, 1021B, 1022A, 1022B, 1023A, 1023B; 2021A, 2021B, 2022A, 2022B, 2023A, 2023B), said N pairs forming 2*N polarised light beams, said 2*N polarised light beams (1021A, 1021B, 1022A, 1022B, 1023A, 1023B; 2021A, 2021B, 2022A, 2022B, 2023A, 2023B) having different polarisation states, and said two polarised light beams of each pair having orthogonal polarisation states;

- determining the luminous intensities of the 2*N polarised light beams (1021A, 1021B, 1022A, 1022B, 1023A, 1023B; 2021A, 2021B, 2022A, 2022B, 2023A, 2023B),

- determining for each of the N pairs of two polarised light beams, the ratio $\delta_i$, where i = 1, 2, ..., N, between the difference and the sum of the luminous intensities of said two polarised light beams of the i-th pair to form a vector $\overline{\delta}$, from the ratios $\delta_i$,

- determining the Mueller matrix $\overline{\overline{M}}$ of the polarimetric analysis means (103, 110, 120, 130, 104; 203, 211, 212, 221, 222, 204; 320, 311, 312, 330, 303),

- determining the total luminous intensity $S_0$ of the 2*N polarised light beams (1021A, 1021B, 1022A, 1022B, 1023A, 1023B; 2021A, 2021B, 2022A, 2022B, 2023A, 2023B),

- determining the reduced Stokes vector $\overline{s_r}$ by inverting the relation $\overline{\delta} = \overline{\overline{M}}\,\overline{s_r}$ , and

- deducing therefrom the polarisation state of the upstream light beam (102; 202; 302).

Fig.1

Fig.3

110

Fig.2

110

Fig.4

110

110

Fig.5

Fig.6

Fig.7

**EP 2 877 822 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003075676 A

- EP 1519170 A

**Littérature non-brevet citée dans la description**

- **KNITTER et al.** Spectrally resolving single-shot polarimefer. *Optics Letters,* 2011, vol. 36, 3048-3050